Europäisches Patentamt

European Patent Office

Office européen des brevets

(19)

(11) Veröffentlichungsnummer : **0 054 260**
**B1**

(12) **EUROPÄISCHE PATENTSCHRIFT**

(45) Veröffentlichungstag der Patentschrift :
25.03.87

(21) Anmeldenummer : 81110294.6

(22) Anmeldetag : 09.12.81

(51) Int. Cl.⁴ : **F 16 D 69/02**

(54) Verfahren zur Herstellung von Reibbelägen sowie Reibbeläge, insbesondere Kupplungsbeläge.

(30) Priorität : 11.12.80 DE 3046696

(43) Veröffentlichungstag der Anmeldung :
23.06.82 Patentblatt 82/25

(45) Bekanntmachung des Hinweises auf die Patenterteilung : 25.03.87 Patentblatt 87/13

(84) Benannte Vertragsstaaten :
FR GB IT

(56) Entgegenhaltungen :
EP-A- 0 000 840
FR-A-   740 247
FR-A- 1 338 844
FR-A- 2 375 495

(73) Patentinhaber : Rex-Patent Graf von Rex KG
Schillerstrasse 40
D-7170 Schwäbisch Hall (DE)

(72) Erfinder : Graf von Rex, Wolff
Schillerstrasse 32
D-7170 Schwäbisch Hall (DE)
Erfinder : Fetzer, Hans
Emil-Kost-Weg 5
D-7170 Schwäbisch Hall (DE)

(74) Vertreter : Patentanwälte TER MEER - MÜLLER -
STEINMEISTER et al
Mauerkircherstrasse 45
D-8000 München 80 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 054 260 B1

Jouve, 18, rue St-Denis, 75001 Paris, France

## Beschreibung

Gegenstand der Erfindung ist ein Verfahren zur Herstellung von asbestfreien Reibbelägen durch homogenes Vermischen von Fasermaterial, hitzehärtbarem Bindemittel, gegebenenfalls üblichen Zusatzstoffen und Wasser, Ausformen der so erhaltenen Masse, Bilden der Reibbelag-Rohlinge, Trocknen, Aushärten und Verfestigen unter Hitze und Druck (EP-A-0 000 840).

Reibbeläge, sowohl Bremsbeläge (die also der Energievernichtung dienen) als auch Kupplungsbeläge (welche der Energieübertragung dienen) werden im Maschinen- und Motorenbau, insbesondere im Bereich der Kraftfahrzeugindustrie in großem Umfang verwendet. Es werden an sie unterschiedlichste Forderungen, sowohl hinsichtlich der mechanischen Festigkeit, des Reibverhaltens, des thermischen Standvermögens, der Unempfindlichkeit gegenüber Öl, Wasser und korrodierenden Einflüssen, der Klimaunempfindlichkeit und dgl. gestellt.

Reibbeläge, insbesondere Kupplungsbeläge wie Kupplungsscheiben und dgl., sind im allgemeinen auf der Basis von Garnen und/oder Geweben, insbesondere von Asbestgarnen und -geweben aufgebaut. Die Garne bzw. Gewebe werden mit Bindemitteln und Zuschlagstoffen, häufig mit einem Gemisch dieser Materialien, imprägniert bzw. behandelt. Bei den Bindemitteln handelt es sich meist um hitzehärtbare Phenol- oder Kresolharze und zum Teil auch natürliche oder künstlich hergestellte Latices mit den notwendigen Vulkanisierhilfsmitteln, Beschleunigern usw. Zu den üblichen Zuschlagstoffen gehören Stoffe zur Beeinflussung des Reibwertes und des Verschleißverhaltens, organische oder anorganische Füllstoffe, wie Schwerspat, Kaolin, Grafit, Metalloxide, Asbestpulver, Öle und Polymerisate.

Für die Herstellung sind verschiedene Verfahrensarten bekannt. Beispielsweise kann so vorgegangen werden, daß die Garne bzw. Gewebe mit einem trockenen Gemisch der Bindemittel und Zuschlagstoffe zusammengebracht, dann in entsprechende Formen eingebracht und unter Erhitzen und Druck verfestigt und ausgehärtet werden. Die Heißverpreßtemperaturen liegen meist im Bereich von 150 bis 200 °C, die Preßdrücke im Bereich von etwa 17 bis 25 N/mm². Die Preßzeit ist abhängig von der Stärke des Reibbelags und kann einige Minuten betragen. Die Aushärtung erfolgt vielfach bei höheren Temperaturen über längere Zeit, oft bis zu mehreren Stunden. Anstelle der Zugabe der Bindemittel und Zusatzstoffe in fester Form erfolgt häufig die Imprägnierung des Garns oder des Gewebes mit einer Lösung des hitzehärtbaren Bindemittels in einem organischen Lösungsmittel. Die übrigen Zusatzstoffe und etwaige Hilfsmittel können getrennt oder zusammen mit der Lösung des Bindemittels, gegebenenfalls darin suspendiert, eingebracht werden.

Allen diesen bekannten Verfahren haften beachtliche Mängel an. So ist das Trockenverfahren, wegen der Handhabung feinteiligen, festen Materials und der damit verbundenen Staubgefährdung aus arbeitshygienischen Gründen sehr problematisch. Dies gilt insbesondere dann, wenn die Trockenmischungen feinstaubförmige Anteile mineralischen Fasermaterials enthalten. Die Verwendung von Lösungsmitteln überwindet zwar die Staubgefährdung, hat jedoch andere erhebliche Nachteile. Aus gesundheitlichen und sicherheitstechnischen Gründen kann man die Lösungsmittel nicht einfach verdampfen lassen. Schon wegen einer etwaigen Explosionsgefahr, aber auch aus wirtschaftlichen Gründen, muß das Abtreiben der Lösungsmittel in geschlossenen Vorrichtungen erfolgen. Das Lösungsmittel kann zwar dann kondensiert und zur Wiederverwendung einer Destillation unterworfen werden. Apparativ ist diese Verfahrensweise doch sehr aufwendig, abgesehen von unvermeidbaren Lösungsmittelverlusten. Hier treten dann auch noch ökologische Probleme auf.

Versuche, anstelle von Garnen und Geweben wässrige Faseraufschlämmungen zu verwenden, in welche dann die Bindemittel und sonstigen Zuschlagstoffe eingemischt werden, haben sich ebenfalls als unbefriedigend erwiesen. Die nach dem Einbringen der wässrigen Schlämme in Siebformen anfallenden Abwässer würden ohnehin, insbesondere wegen ihres Gehalts an Phenol- bzw. Kresolverbindungen, eine erhebliche Umweltbelastung darstellen und könnten ohne Aufbereitung nicht abgeleitet werden. Abgesehen davon müßten wirklich unbefriedigende Verluste an Bindemitteln und Zuschlagstoffen hingenommen werden.

Die EP-A-0 000 840 beschreibt ein Verfahren zur Herstellung von asbestfreien Reibbelägen durch homogenes Vermischen eines anorganische und organische Fasern enthaltenden Fasermaterials, einem hitzehärtbaren Bindemittel, gegebenenfalls üblichen Zusatzstoffen und Wasser. Die erhaltene Mischung wird dann auf einem Drahtnetz oder einem Filz zu einer Bahn ausgeformt, aus der die Reibbelag-Rohlinge hergestellt werden, die nach dem Trocknen unter Hitze und Druck ausgehärtet und verfestigt werden. Diese Verfahrensweise ist insofern nachteilig, als beim Ausformen der Mischung bindemittelhaltiges Wasser anfällt, welches erhebliche Umweltprobleme aufwirft. Darüber hinaus wird das Verfahren aufwendig und führt zu Produkten, die in ihren Eigenschaften zu wünschen übrig lassen, namentlich bezüglich der Sprengdrehzahlen bei höheren Temperaturen, wie sie für Kupplungsbeläge eingehalten werden müssen.

Die Aufgabe der vorliegenden Erfindung besteht somit darin, ein Verfahren zur Herstellung von asbestfreien Reibbelägen anzugeben, welches in einfacher Weise Reibbeläge mit hervorragenden Eigenschaften ergibt, ohne das Umweltverschmutzungsprobleme durch hitzehärtbare Bindemittel enthaltende Abwässer und dergleichen auftreten.

Diese Aufgabe wird nun gelöst durch die kennzeichnenden Merkmale des Verfahrens gemäß Hauptanspruch. Die Unteransprüche betreffen besonders bevorzugte Ausführungsformen dieses Erfindungsgegenstandes sowie die mit Hilfe des beanspruchten Verfahrens erhaltenen asbestfreien Reibbeläge.

Bei dem erfindungsgemäßen Verfahren wird durch die Anwendung des plastifizierenden Bestandteils mit fließfähig machendem Effekt und des Faser/Wasser-Flottenverhältnisses von 1 : 3 bis 1 : 7 eine homogene plastische Masse erhalten, die direkt, vorzugsweise durch Extrudieren zu den Reibbelag-Rohlingen verformt werden kann.

Als plastifizierender Bestandteil mit fließfähig machendem Effekt können die bekannten anorganischen oder organischen fließfähig machenden Mittel verwendet werden. Bei anorganischen Fasern sind insbesondere Pektine oder damit verwandte Polysaccharide, Pflanzenleime und dergleichen verwendbar, während bei organischen Fasern die üblichen Weichmacher in Abhängigkeit vom jeweiligen Kunststoff, beispielsweise Ester usw. verwendet werden können. Auch Viskoselösungen, z. B. Xanthogenat, Methylcellulose usw. können verwendet werden.

Es hat sich gezeigt, daß der mit Hilfe des erfindungsgemäßen Verfahrens erreichte Zerteilungs- und Verteilungsgrad der Fasern ein wichtiges Kriterium für die Bildung eines Reibbelags hoher Qualität und trotzdem leichtester Zugänglichkeit ist. Derartige Reibbeläge weisen Sprengdrehzahlen von > 12 000/150 °C bzw. > 10 000/250 °C auf (Belaggröße : Außendurchmesser 200 mm, Innendurchmesser 130 mm, Dicke 3,5 mm).

Es ist zwar aus der FR-A-2 375 495 ein Verfahren zur Herstellung von Asbest-Reibbelägen bekannt. Abgesehen davon, daß dieser Entgegenhaltung aber keinerlei Hinweis entnommen werden kann wie asbestfreie Reibbeläge hergestellt werden könnten, werden dort jene nachteiligen Verfahrensmaßnahmen benutzt, die durch die vorliegende Erfindung gerade überwunden wurden. Als Fasern können zur Durchführung des erfindungsgemäßen Verfahrens Mineralfasern, wie Glasfasern, Gesteinsfasern, Schlackefasern, organische Fasern, insbesondere hitzebeständige organische Fasern, wie Aramidfasern, Kohlenstoffasern oder Gemische dieser Fasern verwendet werden. Die im wesentlichen in Wirrlage über den ganzen Querschnitt des Reibbelags verteilten Fasern verleihen den erfindungsgemäß hergestellten Reibbelägen eine so große innere Festigkeit, daß voll befriedigende Sprengdrehzahlen bei Reibbelägen erzielt werden, deren Gehalt an Fasermaterial niedriger liegt als bislang erforderlich. So sind beispielsweise Reibbeläge mit einem Fasergehalt von 20-30 Gew-%, bezogen auf das Gesamtgewicht des Reibbelags, voll befriedigend ; im allgemeinen liegt der Faseranteil zwischen 30-60 Gew.-%, bezogen auf das Gesamtgewicht des Reibbelags.

Die Anteile an leichter verfügbaren Zuschlagstoffen, wie Schwerspat, Kaolin usw. können entsprechend erhöht werden. Die ausgezeichneten Sprengdrehzahlwerte sind möglicherweise auf die homogene Verteilung der Fasern zurückzuführen, während bei Reibbelägen, die unter Verwendung von Garnen oder Geweben gebildet sind, wegen der krassen Inhomogenitäten im Übergangsbereich von Garn zu umgebender Matrix kerbartige Effekte mit entsprechender Verringerung der Sprengdrehzahl, auftreten. Es besteht die Gefahr von Rißbildung.

Bei Durchführung des erfindungsgemäßen Verfahrens kommt es entscheidend auf die Gegenwart eines plastifizierenden Bestandteils bei dem beanspruchten Flottenverhältnis an. Als plastifizierende Mittel können alle einen fließfähig bzw. pastös oder weichmachenden Effekt aufweisende Substanzen oder Gemische verwendet werden, wobei es einzig und allein darauf ankommt, daß hierdurch die Bildung einer teigig verstreichoder verspachtelbaren Masse ermöglicht wird. Als plastifizierende Stoffe können z. B. wäßrige Kolloidfasern verwendet werden, wobei das in einem solchen wäßrigen Kolloid enthaltene Wasser nur in solchen Mengen zugesetzt werden darf, daß das angegebene Flottenverhältnis nicht verlassen wird. Der Gehalt an plastifizierendem Bestandteil beträgt im allgemeinen etwa 1-25 Gew.-%, bezogen auf das Gesamtgewicht des ausgehärteten Reibbelags.

Gemäß einer besonders bevorzugten Ausführungsform wird dabei so vorgegangen, daß man eine Mischung, welche die für den Reibbelag vorgesehenen Fasern, Netzmittel und Wasser im beanspruchten Flottenverhältnis enthält, unter intensiven Mischbedingungen zu einer Faserdispersion homogenisiert, derart, daß mindestens etwa 30 Gew.-%, bezogen auf den Gesamtfasergehalt, als Kolloidfasern vorliegen. Die Kolloidfasern haben eine stark plastifizierende Wirkung, so daß ein Teil der ohnehin für die Reibbelagbildung erforderlichen Fasern gleichzeitig die Funktion eines plastifizierenden Bestandteils ausübt. Insbesondere bei Verwendung von Gemischen mit anorganischen Fasern wie Aluminiumoxyd oder Gesteinsfasern, gelingt es auf diesem Wege asbestfaserfreie Reibbeläge herzustellen.

Geeignete Beispiele von den bereits erwähnten Pektinen sind auch Algin, ferner Gummi arabicum usw.

Die Homogenisierung des Fasern, Netzmittel, plastifizierende Bestandteile und Wasser enthaltenden Gemisches gelingt durch intensives Mischen, insbesondere unter Anwendung von Scherkräften, beispielsweise Schneidmischern usw. Die sonstigen üblichen Zusatzstoffe werden vorzugsweise mit dieser homogenen faserhaltigen Masse homogen gemischt, wenn auch eine Zugabe, wenigstens von Teilen dieser Zusatzstoffe, zu dem Fasern, Netzmittel, Wasser und plastifizierende Bestandteile enthaltenden Gemisch bereits vor dessen Homogenierung durchaus möglich ist.

Als Netzmittel bzw. Tenside werden vorzugsweise von Alkalisalzen der Fettsäure freie Anionenaktiven oder nichtionogene Netzmittel bzw. Tenside, wie Alkylsulfonate, Arylsulfonate, Alkarylsulfonate, Schwefelsäureester, z. B. sulfatierte Öle, Amide, Äther, Äthylenoxidaddukte, Monofettsäureester von Zucker oder Zuckeralkoholderivaten usw. benutzt. Die Verwendung von Alkalisalzen höherer Fettsäuren ist zwar nicht ausgeschlossen, hat jedoch auf die Reibbeläge keinen vorteilhaften Einfluß.

Die nach der Homogenisierung erhaltene plastische extrudierbare und spachtelfähige Masse kann unmittelbar in die Reibbelagformen eingebracht und auch darin getrocknet werden, wobei die Verwendung von Verstärkungsmaterial, wie Filamentgarne z. B. aus Kevlar, Glas usw., nicht ausgeschlossen ist. Die Trocknungstemperaturen liegen meist im Bereich von 40-100 °C. Die Trocknungszeit der Rohlinge beträgt in Abhängigkeit von der Trocknungstemperatur und Belagstärke meist zwischen 30 min und mehreren Stunden. Es ist natürlich auch die Trocknung bei Raumtemperatur oder nur mäßig erhöhten Temperatur bei entsprechend erhöhten Trocknungszeiten möglich. Vorzugsweise werden die Verformlinge vor dem endgültigen Trocknen noch verdichtet. Dadurch wird die Formhaltigkeit des Endprodukts wesentlich erhöht.

Die getrockneten Formlinge werden dann üblicherweise, gegebenenfalls nach erneutem Vorwärmen, auf z. B. 100-120 °C, bei Temperaturen zwischen 150-175 °C und Drücken zwischen 30 und 60 N/mm² verpreßt und verfestigt. Anschließend erfolgt dann die Nach- bzw. Aushärtung in üblicher Weise, meist mit Temperaturstaffelung zwischen 190-220 °C, in Sonderfällen auch höher und meist in einer Zeitstaffelung bis zu 20 Stunden insgesamt.

Die erhaltenen Beläge werden dann auf Maß geschliffen und gebohrt.

Das nachfolgende Beispiel dient der Erläuterung der Erfindung.

Beispiel

Herstellung von Kupplungsbelägen

Zunächst werden 120 g Fasern, nämlich 30 g Aluminiumoxydfasern, 30 g Kohlenstoffasern (6 mm), 30 g Glasfasern (6 mm) und 30 g Polyacrylnitrilfasern (weiß), halbmatt, 6,7 d tex 4 mm kurz vermischt. 4 g Netzmittel werden in 300 ml Wasser gelöst und hinzugefügt. Darauf erfolgt eine innige Vermischung in einem Kneter (ca. 20 min).

180 g Bakelit (H), 60 g Baryt und 60 g Kaolin (zusammen 300 g) werden in 200 ml Wasser angeteigt und ca. 10 min vermischt. 12 g Plastifizierungsmittel auf Alginatbasis werden zum Schluß trocken eingemischt. Danach entsteht eine streich- und extrudierfähige Masse.

Zur Herstellung von Rohlingen wird die Masse über einen Kolben oder Schneckenpresse durch eine schlitzförmige Austrittsöffnung extrudiert und gleichzeitig in die Form gelegt. Die Rohlinge lassen sich nach kurzem Andrücken der Gegenform sehr leicht aus der Grundform entfernen und zeigen gute Rohlingsfestigkeit. Die Rohlinge wurden sodann bei 60 °C getrocknet. Zeit : ca. 4 h. Sie können weiterhin verdichtet werden, so daß am Ende kompakte Vorpreßlinge entstehen.

Die Herstellung der Kupplungsscheiben erfolgt nun in zum Teil bekannter Weise, nämlich Vorwärmen der Vorpreßlinge auf 100 °C und anschließendes Verpressen bei 150-170 °C und 60 N/mm². Danach erfolgt ein Aushärten der Beläge 4 h bei 190 °C, anschließend 10 h bei 200 °C und 5 Stunden bei 220 °C. Danach werden die Beläge auf Maß geschliffen und gebohrt.

## Patentansprüche

1. Verfahren zur Herstellung von asbestfreien Reibbelägen durch homogenes Vermischen von Fasermaterial, hitzehärtbarem Bindemittel, gegebenenfalls üblichen Zusatzstoffen und Wasser, Ausformen der so erhaltenen Masse, Bilden der Reibbelag-Rohlinge, Trocknen, Aushärten und Verfestigen unter Hitze und Druck, dadurch gekennzeichnet, daß man die Bestandteile unter Zusatz eines Netzmittels und eines plastifizierenden Bestandteils mit fließfähig machendem Effekt bei einem Faser/Wasser-Flottenverhältnis von 1 : 3 bis 1 : 7 zu einer plastischen Masse homogenisiert und die plastische Masse direkt zu den Reibbelag-Rohlingen verformt.

2. Verfahren nach Anspruch 1, dadurch gekennzeichnet, daß man die Zusatzstoffe erst nach dem Homogenisieren der Masse aus Fasern, Bindemittel, Netzmittel, Wasser und plastifizierendem Bestandteil intensiv einmischt.

3. Verfahren nach einem der Ansprüche 1 oder 2, dadurch gekennzeichnet, daß man als plastifizierenden Bestandteil Pektine, Algin, Gummi arabicum, Pflanzenleime, ein Faserkolloid und/oder Viskoselösung verwendet.

4. Verfahren nach Anspruch 3, dadurch gekennzeichnet, daß man einen Faserkolloidgehalt von mehr als etwa 30 Gew.-, bezogen auf den Gesamtfasergehalt, anwendet.

5. Verfahren nach mindestens einem der vorhergehenden Ansprüche, dadurch gekennzeichnet, daß die Verformung der plastischen Masse durch Extrudieren erfolgt.

6. Asbestfreier Reibbelag, hergestellt nach einem Verfahren gemäß den Ansprüchen 1 bis 5.

## Claims

1. A method for the manufacture of asbestos-free friction linings by homogeneously mixing a fiber material, a thermosetting binder, optionally customary additives and water, shaping the obtained mass, forming the friction lining blanks, drying, strenghtening and hardening under heat and pressure, characterized by homogenizing the components in the presence of a wetting agent and a plastifying component having a flowable rendering effect in a fiber to water mixture ratio of 1 : 3 to 1 : 7 into a plastic mass and directly forming the pastic mass into the friction lining blanks.

2. The method according to claim 1, characterized by intensively mixing the additives after homogenization of the mass comprising fibers, binder, wetting agent, water and plastifying agent.

3. The method according to claims 1 or 2, characterized in that the plastifying component is selected from the group comprising pectins, algin, gum arabic, vegetable glues, a fibrous colloid and/or viscose solution.

4. The method according to claim 3, characterized in that the content of colloids is more than about 30 % by weight, based on the total content of the fibers.

5. The method according to any of the foregoing claims, characterized in that the plastic mass is shaped by extruding.

6. An asbestos-free friction lining manufactured according to a process according to claims 1 to 5.

## Revendications

1. Procédé de fabrication de garnitures de friction sans amiante par mélange homogène de matières fibreuses, d'un liant thermodurcissable, le cas échéant d'additifs habituels et d'eau, par démoulage de la masse ainsi obtenue, par formation d'ébauches de garnitures de friction, séchage, durcissement et solidification sous l'effet de la chaleur et de la pression, caractérisé en ce que les composants sont homogénéisés en une masse plastique, avec addition d'un agent mouillant et d'un plastifiant à effet fluidifiant et avec un rapport du bain de fibres/eau de 1 : 3 à 1 : 7, et que la masse plastique est conformée directement en ébauches de garnitures de friction.

2. Procédé selon la revendication 1, caractérisé en ce que les adjuvants ne sont intégrés par mélange intensif qu'après l'homogénéisation de la masse composée des fibres, du liant, de l'agent mouillant, de l'eau et du plastifiant.

3. Procédé selon l'une des revendications 1 ou 2, caractérisé en ce qu'il met en œuvre, comme plastifiant, des pectines, de l'algine, de la gomme arabique, des colles végétales, un colloïde de fibres et/ou une solution de viscose.

4. Procédé selon la revendication 3, caractérisé en ce que la teneur en colloïde de fibres est réglée sur plus de 30 % en poids environ, rapportée à la teneur totale en fibres.

5. Procédé selon l'une des revendications 1 à 4, caractérisé en ce que la conformation de la masse plastique se fait par extrusion.

6. Garniture de friction sans amiante réalisée d'après un procédé selon les revendications 1 à 5.